Europäisches Patentamt

European Patent Office

Office européen des brevets

(19)

(11) Veröffentlichungsnummer: **0 045 516**
**B1**

(12) **EUROPÄISCHE PATENTSCHRIFT**

(45) Veröffentlichungstag der Patentschrift:
05.12.84

(51) Int. Cl.³: **B 01 D 53/04**

(21) Anmeldenummer: **81106119.1**

(22) Anmeldetag: **05.08.81**

(54) **Filtereinsatz für Gasadsorptionsfilter, insbesondere für die Luftreinigung.**

(30) Priorität: **06.08.80 DE 3029758**

(43) Veröffentlichungstag der Anmeldung:
**10.02.82 Patentblatt 82/6**

(45) Bekanntmachung des Hinweises auf die Patenterteilung:
**05.12.84 Patentblatt 84/49**

(84) Benannte Vertragsstaaten:
**AT BE CH DE FR GB IT LI NL**

(56) Entgegenhaltungen:
**DE - A - 2 911 428**
**US - A - 4 081 501**
**US - A - 4 181 513**

(73) Patentinhaber: **Ochs, Hans-Joachim, Gerhardstrasse 39,
D-4030 Ratingen1 (DE)**

(72) Erfinder: **Ochs, Hans-Joachim, Gerhardstrasse 39,
D-4030 Ratingen1 (DE)**

(74) Vertreter: **Bode, Hans, Patentanwalt Bode, Hans,
Dipl.-Ing. Postfach 1130 Weidtmannweg 5-9,
D-4030 Ratingen 1 (DE)**

## Beschreibung

Als Filtereinsätze für die Gasadsorption, insbesondere für die Luftreinigung sind Platten oder Blöcke aus granulierter Aktivkohle oder aus einem anderen Sorbens, beispielsweise einem aktiven Gel, bekannt, bei denen die einzelnen Körner des Granulates durch einen Binder miteinander verbunden sind. Dies ist herstellungstechnisch aufwendig, weil die Blöcke oder Platten einer jeweils vorgegebenen Form für einen Filtereinsatz angepasst werden müssen. Deshalb werden für diesen Zweck in der Regel Gehäuse oder Rahmen verwendet, in denen sich eine Schicht aus geschüttetem granuliertem Sorbens befindet. Bei einer Schüttung verschieben sich jedoch die einzelnen Körner unter der Wirkung der bei Filteranlagen stets vorhandenen Vibrationen selbst dann, wenn die Körner mit einem gewissen Druck zusammen gepresst sind. Dann bilden sich Löcher, durch die die Luft bevorzugt hindurchströmt. Hierdurch verschlechtert sich die Reinigungswirkung und der Filtereinsatz kann nicht bis zur Erschöpfung des Sorbens ausgenutzt werden. Ausserdem entsteht durch Berührung und Verschiebung der Granulatkörner gegeneinander ein staubförmiger Abrieb, der das so eben gereinigte gasförmige Medium verunreinigt und in vielen Fällen durch ein nachgeschaltetes Schwebstoff-Filter wieder entfernt werden muss. Dieser Nachteil kann dadurch vermieden werden, dass man mit Hilfe eines geeigneten gasdurchlässigen Klebers auf einem ebenfalls gasdurchlässigen Trägermaterial eine Schicht aus granuliertem Sorbens anordnet und diese Bahnen durch zick-zack-förmiges Falten in das Gehäuse des Filtereinsatzes so einlegt, dass sie dieses ausfüllt. Hierdurch werden Reibungen der Körner des Sorbens aneinander und das Entstehen staubförmigen Abriebes verhindert. Andererseits ist es bei der Filterung von Luft und anderen Gasen oft erforderlich, dass diese Medien nacheinander mehrere Sorbentien durchströmen, um von verschiedenen Schadstoffen befreit zu werden. Hierzu können Filter mit mehreren Filtereinsätzen verwendet werden, von denen jeder mit einem der erforderlichen Sorbentien versehen ist.

Der Erfindung liegt die Aufgabe zugrund, auf einfache und kostensparende Weise Filtereinsätze herzustellen, in denen Lagen verschiedener Sorbentien angeordnet sind, so dass sie nacheinander von dem zu reinigenden gasförmigen Medium durchströmt werden, die aber zugleich die Nachteile der mit Schüttungen gefüllten Filtereinsätze vermeiden.

Gegenstand der Erfindung ist ein Filtereinsatz für Gasadsorptionsfilter, insbesondere für die Luftreinigung, der mehrere, in Gasströmungsrichtung aufeinander folgende Lagen eines gasdurchlässigen Trägermaterials enthält, in und/oder auf dem Sorbentien angeordnet sind und bei dem das Trägermaterial jeweils mindestens zweier unmittelbar oder mittelbar aufeinander folgende Lagen zusammenhängend ausgebildet ist und deshalb eine Länge aufweist, die mindestens gleich der Länge zweier Lagen ist und der sich dadurch kennzeichnet, dass das Trägermaterial mindestens zwei Längenabschnitte aufweist, in und/oder auf denen jeweils verschiedene Sorbentien angeordnet sind.

Durch die Erfindung ergeben sich Filtereinsätze, die mit einer oder auch mehreren zusammenhängenden langen Bahnen des Filtermaterials gefüllt sind, wobei diese Bahnen in Abschnitten so angeordnet sind, dass diese Abschnitte nacheinander von dem gasförmigen Medium durchströmt werden und bei denen verschiedenen Abschnitte verschiedene Sorbentien enthalten.

Bei einer bevorzugten Ausführungsform eines Filtereinsatzes gemäss der Erfindung, entsprechen die Längen der Längenabschnitte, bei denen in und/oder auf dem Trägermaterial verschiedene Sorbentien angeordnet sind, etwa der Länge einer Lage. Diese Filtereinsätze haben den Vorteil, dass sich in ihnen unter entsprechender Bemessung der Gehäuse die Anzahl der Lagen des Trägermaterials feinstufig verändern lässt. Die Anzahl der Lagen kann jedem beliebigen Vielfachen der Anzahl der verwendeten Sorbentien entsprechen.

Die Filtereinsätze gemäss der Erfindung können so ausgebildet sein, dass das Trägermaterial in zick-zack-förmiger Lage einen Stapel bildet. Ein solcher Stapel lässt sich in einfacher Weise in das rechteckige Gehäuse eines Filtereinsatzes einlegen, auf dessen Abmessungen er abgestimmt ist. Der Stapel kann auch innerhalb des Gehäuses selbst gebildet werden. Bei der Wahl der Gehäuseabmessungen ist eine der drei Abmessungen durch die Breite der Bahn des Trägermaterials vorgegeben, während die zweite der Abmessungen durch entsprechende Länge der Lagen und die dritte Abmessung durch eine entsprechende Anzahl von Lagen frei wählbar ist. Bei einer anderen Ausführungsform des Filtereinsatzes gemäss der Erfindung bildet das Trägermaterial einen Wickel. Dieser Wickel lässt sich leicht in das hohlzylindrische Gehäuse eines Filtereinsatzes einführen. Die Anzahl der Lagen des Wickels wird entsprechend der Stärke des Zylindermantels des Gehäuses gewählt.

Das Trägermaterial des Filtereinsatzes gemäss der Erfindung kann ein aus Fasern bestehendes Vlies sein, auf dem die granulierten Sorbentien mit einem gasdurchlässigen Binder befestigt sind oder es kann sich bei dem Trägermaterial um einen gasdurchlässigen Schaum handeln, in den die granulierten Sorbentien eingebettet sind.

Im folgenden sind Ausführungsbeispiele von Filtereinsätzen gemäss der Erfindung anhand der Zeichnung beschrieben, in der

Figur 1 einen Teil einer Bahn eines Trägermaterials zeigt auf und/oder in der jeweils verschiedene Sorbentien angeordnet sind während

Figur 2 einen Längsschnitt durch eine solche Bahn zeigt, auf deren Trägermaterial verschiedene Sorbentien angeordnet sind.

Figur 3 zeigt einen Schnitt durch einen Filtereinsatz, in dem das Trägermaterial in zick-zack-förmiger Lage einen Stapel bildet,

Figur 4 zeigt in teilweise aufgeschnittener Seitenansicht einen Filtereinsatz, in dem das Trägermaterial einen Winkel bildet, während

Figur 5 einen Schnitt durch den Filtereinsatz gemäss Figur 4 nach der Linie V-V zeigt.

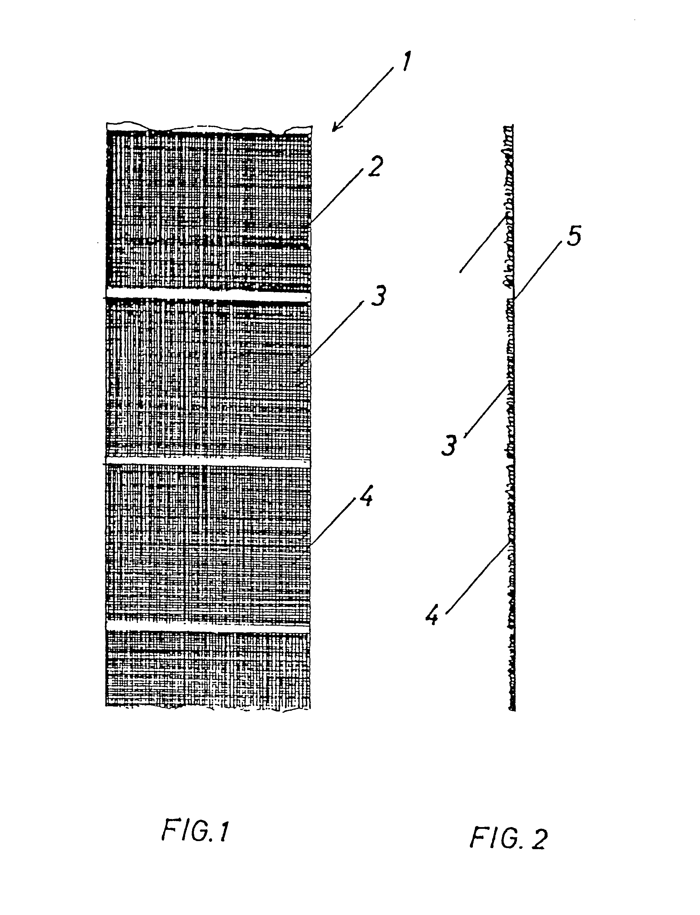

In Figur 1 ist ein Ausschnitt aus dem bandförmigen Trägermaterial, das in seiner Gesamtheit mit 1 bezeichnet ist, dargestellt. Das Trägermaterial ist in Abschnitte 2, 3 und 4 unterteilt, in und/oder auf denen verschiedene Sorbentien angeordnet sind. Die Anordnung der Sorbentien auf dem Trägermaterial kann, wie in Figur 2 erkennbar, so erfolgen, dass die granulierten Sorbentien auf einem mit 5 bezeichneten, aus Fasern bestehenden, luftdurchlässigem Vlies mit einem ebenfalls luftdurchlässigen nicht aushärtendem Binder befestigt sind. Es ist aber auch möglich, dass die Trägerbahn 1 aus einem gasdurchlässigen Schaum besteht, in den in den Abschnitten 2, 3 und 4 verschiedene Sorbentien eingebettet sind. Bei den Sorbentien kann es sich beispielsweise um granulierte Aktivkohle oder um ein geeignetes aktives Gel handeln. In jedem Fall ist die Trägerbahn ausreichend biegsam, so dass sie spiralförmig aufgewickelt oder zick-zack-förmig gefalten werden kann, letzteres zumindest in den Bereichen zwischen den Abschnitten 2 und 3 bzw. 3 und 4.

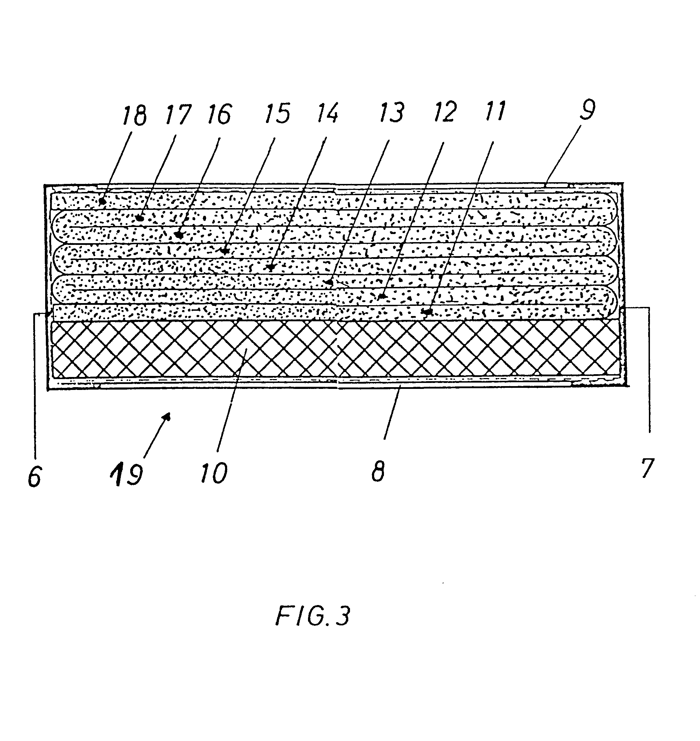

In Figur 3, die einen Schnitt durch einen quaderförmigen Filtereinsatz zeigt, sind die gasundurchlässigen Wände des den Filtereinsatz umgebenden Gehäuses mit 6 und 7 bezeichnet, die gasdurchlässigen, z.B. gitterartige ausgebildete Wände mit 8 und 9. Im gezeigten Ausführungsbeispiel könnte das gasförmige Medium von unten nach oben durch den Filtereinsatz strömen. Dann ist mit 10 ein mechanisches Filter bezeichnet, das zunächst grobe Verunreinigungen aus dem Rohgas entfernt. In Strömungsrichtung des Gases folgen dann insgesamt 8 Lagen von mit Sorbentien versehenem Trägermaterial. Sie sind von unten nach oben mit 11 bis 18 bezeichnet. Die Lagen sind durch zick-zack-förmiges Einlegen einer langen Bahn des Trägermaterials in das in seiner Gesamtheit mit 19 bezeichnete Gehäuse des Filtereinsatzes entstanden, zweckmässig ehe die Wand 9 angebracht wurde.

Es sei nun angenommen, dass das im Gehäuse 19 befindliche Filtermaterial vier verschiedene Sorbentien, nämlich a, b, c und d enthalten soll. Wenn dies in der Weise geschieht, dass die verschiedenen Sorbentien auf oder in dem Trägermaterial auf Längenabschnitten angebracht sind, deren Längen jeweils etwa der Länge einer Lage entsprechen, dann enthalten die Lagen 11 und 15 das Sorbens a, 12 und 16 das Sorbens b, 13 und 17 das Sorbens c und 15 und 18 das Sorbens a. Wenn jedoch die Längenabschnitte des Trägermaterials in oder auf den jeweils eines der Sorbentien angeordnet sind, etwa der doppelten Länge einer Lage entsprechen, dann enthalten die Lagen 11 und 12 das Sorbens a, 13 und 14 das Sorbens b, 15 und 16 das Sorbens c und 17 und 18 das Sorbens d. Bei der erstgenannten Anordnung lässt sich die Dicke der vom gasförmigen Medium durchströmten Filterschicht in kleinen Stufen verändern, und zwar betragen die Stufen jeweils die Summe so vieler Lagen, wie verschiedene Sorbentien im Filtereinsatz verwendet werden. Im zweiten Fall könnte die Herstellung der mit verschiedene Sorbentien versehenen Bahnen des Trägermaterials unter geringerem Aufwand durchgeführt werden und es lassen sich Filter herstellen, deren der Breite der Zeichnung entsprechende Höhe in einem grösseren Bereich veränderbar ist als dies im ersteren Fall möglich ist.

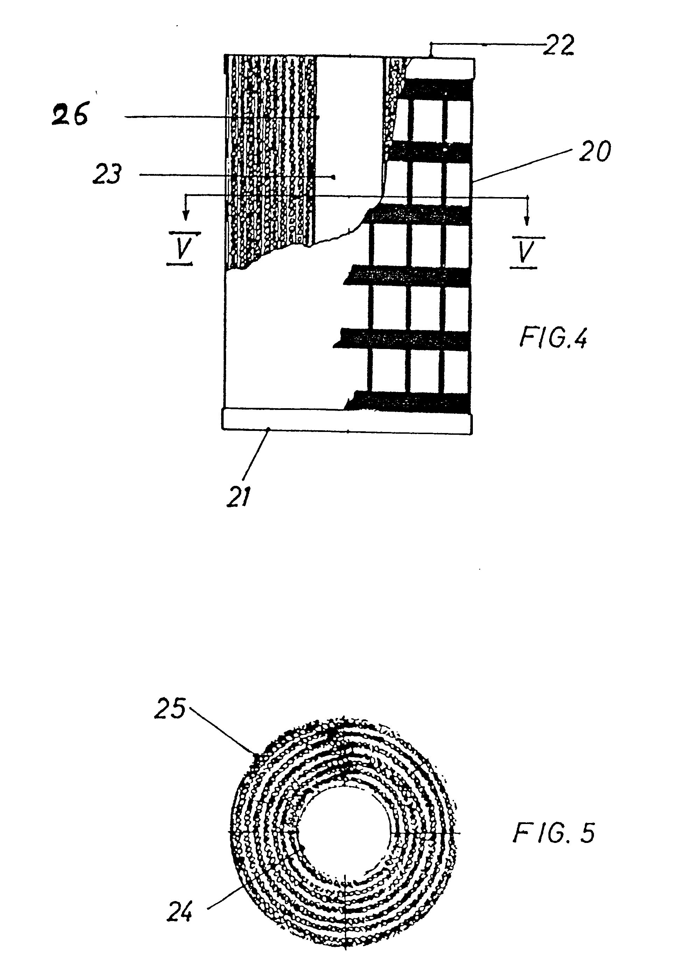

In den Figuren 4 und 5 ist ein hohlzylindrischer Filtereinsatz, eine sogenannte Filterkerze dargestellt. Das Gehäuse besteht aus einem gasdurchlässigen inneren Zylindermantel 26, einem ebenfalls gasdurchlässigen äusseren Zylindermantel 20, einem gasdichten kreisförmigen Boden 21 und einem ebenfalls gasdichten kreisförmigen Deckel 22. Die Zu- bzw. Abfuhr des zu reinigenden gasförmigen Mediums erfolgt durch den äusseren Mantel 20 und durch den innerhalb des inneren Mantels 26 gebildeten Kanal 23. Das mit Sorbentien versehene Trägermaterial ist auf den inneren Zylindermantel 26 aufgewickelt und die Stärke des Wickels ist so bemessen, dass sein Aussendurchmesser dem des äusseren Gehäusemantels 20 entspricht. In Figur 5 ist die innere Lage des Wickels mit 24, die äussere Lage mit 25 bezeichnet. Das den Wickel bildende Trägermaterial kann in der Weise mit der gewünschten Zahl verschiedener Sorbentien versehen sein, dass auf seiner gesamten Länge nur so viele mit verschiedenen Sorbentien versehene Längenabschnitte vorhanden sind, wie im Filtereinsatz verschiedener Sorbentien verwendet werden sollen, das Filtermaterial kann jedoch auf kürzeren Längenabschnitten, die sich wiederholend mehrfach aufeinander folgen mit den verschiedenen Sorbentien versehen seien, wobei es wünschenswert aber nicht erforderlich ist, das die Länge eines jeden dieser Abschnitte das Einfache oder ein Vielfaches der sich an der entsprechenden Stelle ergebenden Umfangslänge ist.

Bei allen vorbezeichneten Ausführungsbeispielen der Erfindung tritt der Vorteil auf, dass der Filtereinsatz sich in sehr einfacher sowie zeit- und arbeitsparender Weise dadurch herstellen lässt, dass eine lange Bahn eines Trägermaterials, das verschiedene Sorbentien enthält, zick-zack-förmig in ein quaderförmiges Gehäuse eingelegt oder spiralförmig zur Bildung eines zylindrischen Filters aufgewickelt wird. Es ist aber auch möglich, zwei oder mehrere Bahnen gleichartigen Trägermaterials zunächst zusammenzuführen, ehe sie, wie oben angegeben, durch zick-zackförmiges Legen oder Aufwickeln, weiter verarbeitet werden.

**Patentansprüche**

1. Filtereinsatz für Gasadsorptionsfilter, insbesondere für die Luftreinigung, der mehrere in Gasströmungsrichtung aufeinander folgende Lagen eines gasdurchlässigen Trägermaterials enthält, in und/oder auf dem Sorbentien angeordnet sind und bei dem das Trägermaterial jeweils mindestens zweier unmittelbar oder mittelbar aufeinander folgender Lagen zusammenhängend ausgebildet ist und deshalb eine Länge aufweist, die mindestens gleich der Länge zweier Lagen ist, dadurch gekennzeichnet, dass das Trägermaterial (1, 5) mindestens zwei Längenabschnitte (3 bis 4) aufweist, in und/oder auf denen jeweils verschiedene Sorbentien angeordnet sind.

2. Filtereinsatz nach Anspruch 1, dadurch gekennzeichnet, dass die Längen der Längenabschnitte (2 bis 4), bei denen in und/oder auf dem Trägermaterial (1, 5) verschiedene Sorbentien angeordnet sind, etwa der Länge einer Lage (11 bis 18) entspricht.

3. Filtereinsatz nach Anspruch 1 oder 2, dadurch gekennzeichnet, dass das Trägermaterial (1, 5) in zick-zack-förmiger Lage (11 bis 18) einen Stapel bildet.

4. Filtereinsatz nach Anspruch 1 oder 2, dadurch gekennzeichnet, dass das Trägermaterial (1, 5) einen Wickel (24 bis 25) bildet.

5. Filtereinsatz nach einem oder mehreren der Ansprüche 1 bis 4, dadurch gekennzeichnet, dass das Trägermaterial ein aus Fasern bestehendes Vlies (5) ist, auf dem die granulierten Sorbentien mit einem gasdurchlässigen Binder befestigt sind.

6. Filtereinsatz nach einem oder mehreren der Ansprüche 1 bis 4, dadurch gekennzeichnet, dass das Trägermaterial (1) ein gasdurchlässiger Schaum ist, in dem die granulierten Sorbentien eingebettet sind.

## Claims

1. Filter element for gas adsorption filters, in particular for air purification, comprising a plurality of layers, disposed one after the other in the gas flow direction, of a gas-permeable carrier material, in and/or on which sorbents are arranged, the carrier material in each case being formed in a continuous manner from at least two directly or indirectly consecutive layers and therefore being of a length which is at least the same as the length of two layers, characterised in that the carrier material (1, 5) comprises at least two longitudinal sections (3 to 4), in and/or on which different sorbents are in each case arranged.

2. Filter element according to claim 1, characterised in that the lengths of the longitudinal sections (2 to 4), in and/or on whose carrier material (1, 5) different sorbents are arranged, correspond approximately to the length of one layer (11 to 18).

3. Filter element according to claim 1 or 2, characterised in that the carrier material (1, 5) forms a stack consisting of a zig-zag layer (11 to 18).

4. Filter element according to claim 1 or 2, characterised in that the carrier material (1, 5) forms a roll (24 to 25).

5. Filter element according to one or more of claims 1 to 4, characterised in that the carrier material is a non-woven material (5) which consists of fibres and to which the granular sorbents are secured by means of a gas-permable binding agent.

6. Filter element according to one or more of claims 1 to 4, characterised in that the carrier material (1) is a gas-permeable form, in which the granular sorbents are embedded.

## Revendications

1. Garniture de filtre pour filtre d'adsorption de gaz, en particulier pour l'épuration de l'air, qui comprend plusieurs couches, se succédant dans le sens de l'écoulement des gaz, d'un matériau support perméable aux gaz dans et/ou sur lequel sont disposés des sorbants, et dans laquelle le matériau support à chaque fois d'au moins deux couches se succédant directement ou indirectement est réalisé d'un seul tenant et présente par conséquent une longueur qui est au moins égale à la longueur de deux couches, caractérisée par le fait que le matériau support (1, 5) comporte au moins deux sections longitudinales (3 à 4) dans et/ou sur lesquelles sont respectivement disposés différents sorbants.

2. Garniture de filtre selon la revendication 1, caractérisée par le fait que les longueurs des sections longitudinales (2 à 4) dans lesquelles différents sorbants sont disposés dans et/ou sur le matériau support (1, 5) correspondent sensiblement à la longueur d'une couche (11 à 18).

3. Garniture de filtre selon la revendication 1 ou 2, caractérisée par le fait que le matériau support (1, 5) en couche (11 à 18) en forme de zig-zag forme une pile.

4. Garniture de filtre selon la revendication 1 ou 2, caractérisée par le fait que le matériau support (1, 5) forme un enroulement (24 à 25).

5. Garniture de filtre selon l'une ou plusieurs des revendications 1 à 4, caractérisée par le fait que le matérieu support est un non-tissé constitué de fibres sur lequel les sorbants granulés sont fixés avec un liant perméable aux gaz.

6. Garnitures de filtre selon l'une ou plusieurs des revendications 1 à 4, caractérisée par le fait que le matériau support (1) est une mousse perméable aux gaz dans laquelle sont enrobés les sorbants granulés.

0 045 516

FIG.1

FIG. 2

FIG. 3

FIG.4

FIG. 5